(19) Europäisches Patentamt / European Patent Office / Office européen des brevets

(11) **EP 3 174 255 B1**

(12) **FASCICULE DE BREVET EUROPEEN**

(45) Date de publication et mention de la délivrance du brevet:
**14.08.2019 Bulletin 2019/33**

(51) Int Cl.:
***H04L 12/819*** *(2013.01)*

(21) Numéro de dépôt: **16197547.9**

(22) Date de dépôt: **07.11.2016**

(54) **LIMITEUR DE DÉBIT DE TYPE SEAU À JETONS**

DURCHSATZBEGRENZER VOM TYP TOKEN-BUCKET-ALGORITHMUS

TOKEN BUCKET FLOW-RATE LIMITER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.11.2015 FR 1561348**

(43) Date de publication de la demande:
**31.05.2017 Bulletin 2017/22**

(73) Titulaire: **Kalray**
**91400 Orsay (FR)**

(72) Inventeurs:
- **VAN AMSTEL, Duco**
  **38610 Gières (FR)**
- **BLAMPEY, Alexandre**
  **38360 Sassenage (FR)**
- **DUPONT DE DINECHIN, Benoît**
  **38000 Grenoble (FR)**

(74) Mandataire: **de Jong, Jean Jacques et al**
**Omnipat**
**24, place des Martyrs de la Résistance**
**13100 Aix en Provence (FR)**

(56) Documents cités:
WO-A1-2009/051533     JP-A- 2007 088 994
US-A1- 2004 062 259

EP 3 174 255 B1

## Description

### Domaine technique

L'invention est relative aux réseaux sur puce et plus particulièrement à des limiteurs de débit de type « seau à jetons » utilisables pour injecter des flots de données dans le réseau sur puce au niveau de routeurs.

### Arrière-plan

Un régulateur ou limiteur de débit de type « seau à jetons » fonctionne de la manière suivante. Un compteur de jetons, représentant le seau, est incrémenté à intervalles réguliers. Le compte de jetons sature à un seuil (seau plein). A l'arrivée d'un paquet de données, la taille du paquet est comparée au compte de jetons dans le seau. Si le compte est suffisant, le paquet est émis et les jetons correspondants sont soustraits du seau. Dans le cas contraire, le paquet est rejeté ou attend que le compte de jetons soit atteint.

Un tel limiteur de débit peut conformer un flot de données à un profil dit σ-ρ (sigma-rho). Le paramètre ρ correspond à un débit moyen, souvent une valeur normalisée comprise entre 0 et 1 exprimant une fraction de la bande passante nominale du lien de transmission. Ce paramètre ρ correspond au débit de remplissage du seau à jetons. Le paramètre σ, souvent désigné par le terme anglais « burstiness », exprime l'irrégularité du débit toléré pendant la transmission. Ce paramètre σ correspond à la capacité du seau.

Plus spécifiquement, la taille d'un paquet est généralement exprimée flits (de l'anglais « FLow digIT »), un flit correspondant par exemple à un mot transmissible en un cycle d'une horloge cadençant le lien de transmission. Alors, un flot conforme à un profil σ-ρ est tel que le nombre de flits transmis dans un intervalle Δt quelconque soit inférieur ou égal à ρ•Δt + σ. Si le paramètre ρ est une valeur sans dimension comprise entre 0 et 1, la valeur Δt est le nombre de flits transmissibles en continu dans l'intervalle Δt, ou tout simplement le nombre de cycles d'horloge contenus dans l'intervalle Δt.

L'incrémentation du compteur de jetons est généralement basée sur l'horloge de transmission. Ainsi, lorsque le compteur est incrémenté continûment, c'est-à-dire à chaque cycle d'horloge, on obtient ρ = 1. En divisant la fréquence d'horloge on divise la fréquence d'incrémentation du compteur de jetons, produisant des valeurs de ρ plus petites, par exemple 1/2, 1/3, 1/4, 1/5, etc., pour des facteurs de division respectifs de 2, 3,4,5...

Le degré d'ajustement ainsi obtenu pour le paramètre ρ peut être insuffisant dans certaines applications

Du document JP2007088994, il est déjà connu un circuit de limitation de débit d'une transmission de données selon la technique du seau à jetons, comprenant un compteur de jetons configuré pour être incrémenté à une cadence déterminant le débit moyen de la transmission et un diviseur de fréquence connecté pour commander l'incrémentation du compteur de jetons à partir d'une horloge, le diviseur ayant effectivement un taux de division rationnel.

### Résumé

On prévoit de façon générale un circuit de limitation de débit d'une transmission de données selon la technique du seau à jetons, comprenant un compteur de jetons configuré pour être incrémenté à une cadence déterminant le débit moyen de la transmission ; un diviseur de fréquence connecté pour commander l'incrémentation du compteur de jetons à partir d'une horloge, le diviseur ayant un taux de division entier ; et un modulateur configuré pour alterner le taux de division entre deux entiers différents de manière à faire tendre le débit moyen résultant vers un débit programmé entre deux débits correspondant respectivement aux deux entiers.

Le modulateur peut comprendre un compteur à débordement connecté pour être incrémenté à la fréquence d'horloge par un incrément fixe basé sur l'écart entre le débit programmé et le débit déterminé par un taux de division de base choisi parmi les deux entiers, le compteur à débordement étant connecté au diviseur pour alterner le taux de division à chaque débordement.

Le diviseur de fréquence peut être configuré pour appliquer par défaut le plus petit des deux entiers comme taux de division et augmenter ponctuellement le taux de division à chaque débordement du compteur à débordement.

Le diviseur de fréquence peut comprendre un compteur auxiliaire connecté pour être incrémenté à la fréquence d'horloge et pour compter jusqu'au plus petit des deux entiers, le compteur à débordement étant connecté pour faire sauter une incrémentation au compteur auxiliaire à chaque débordement.

Le débit programmé peut être représenté par un débit normalisé compris entre 0 et 1. Le taux de division de base peut alors être choisi égal à la partie entière du rapport entre l'incrément du compteur de jetons et le débit normalisé, et l'incrément du compteur à débordement peut être basé sur la partie fractionnaire du rapport entre l'incrément du compteur de jetons et le débit normalisé.

L'incrément du compteur à débordement est exprimé par la relation :

$$2^k \{c/\rho\} \cdot \rho/c$$

arrondie à l'entier inférieur ou supérieur, où ρ est le débit normalisé, c l'incrément du compteur de jetons, *k* le nombre de bits du compteur à débordement, et {} désigne la partie fractionnaire.

On prévoit également un procédé de limitation de débit d'une transmission de données selon la technique du seau à jetons, comprenant les étapes consistant à incrémenter un compteur de jetons à des intervalles consécutifs dont la longueur est variable entre deux valeurs discrètes multiples de la période d'une horloge ; choisir les deux valeurs discrètes en fonction d'un débit de transmission programmé ; et appliquer les deux valeurs discrètes au compteur de jetons selon des fréquences respectives choisies pour que la cadence moyenne d'incrémentation du compteur de jetons corresponde au débit de transmission programmé.

Le procédé peut comprendre les étapes consistant à appliquer par défaut une première des deux valeurs discrètes comme intervalle d'incrémentation du compteur de jetons ; incrémenter un compteur à débordement à la fréquence de l'horloge par un incrément basé sur l'écart entre le débit programmé et le débit correspondant à la première valeur discrète ; et appliquer ponctuellement au compteur de jetons la deuxième valeur discrète comme intervalle d'incrémentation à chaque débordement du compteur à débordement.

**Description sommaire des dessins**

Des modes de réalisation seront exposés dans la description suivante, faite à titre non limitatif en relation avec les figures jointes parmi lesquelles :

- la figure 1 est un schéma-bloc d'un exemple de réalisation d'un limiteur de débit de type « seau à jetons » ;

- la figure 2 est un schéma de principe d'un mode de réalisation de limiteur de débit offrant un ajustement précis ;

- la figure 3 est un schéma-bloc d'un mode de réalisation détaillé d'un limiteur de débit basé sur le principe de la figure 2 ;

- les figures 4A à 4D sont des graphes montrant l'évolution de compteurs du limiteur de la figure 3, dans le cadre d'un exemple ;

- la figure 5 est un graphe illustrant une évolution à long terme du nombre de données transmises dans le cadre de l'exemple des figures 4 ; et

- la figure 6 représente schématiquement un système d'émission de plusieurs flots de données concurrents sur un lien réseau partagé, dans lequel des limiteurs de débit peuvent être mis en oeuvre.

**Description de modes de réalisation**

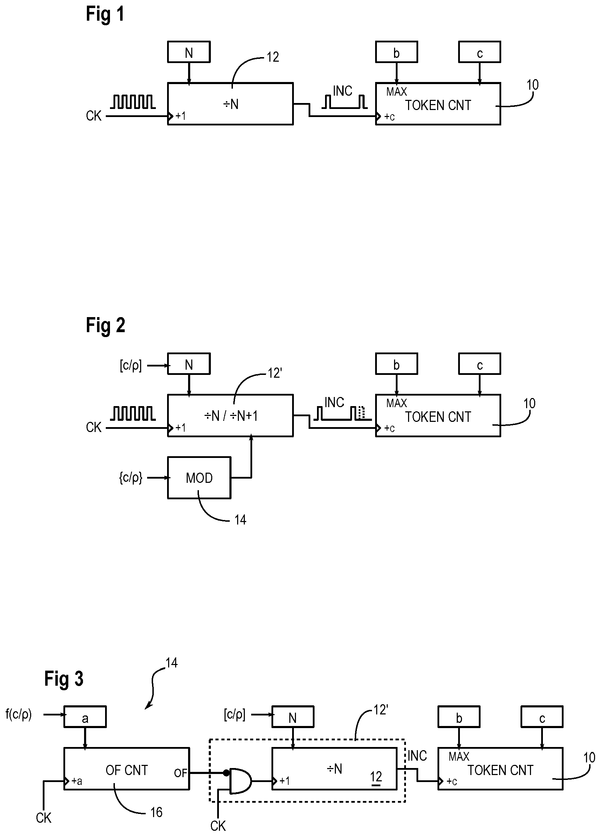

Dans la figure 1, un limiteur de débit de type « seau à jetons » comprend généralement un compteur de jetons 10 qui est connecté pour être incrémenté au rythme d'impulsions INC qui lui arrivent sur une entrée d'horloge. Le contenu du compteur de jetons est limité à une valeur maximale définie par un paramètre $b$, souvent programmable dans un registre. L'incrément à appliquer peut être un entier $c$ supérieur ou égal à 1, programmable dans un autre registre. Ainsi, à chaque impulsion INC, le contenu du compteur 10 augmente de la valeur $c$, jusqu'à la saturation à la valeur $b$.

Les impulsions INC sont fournies à partir d'une horloge CK par un diviseur de fréquence 12. Le taux de division N peut être programmé dans un registre. Le diviseur 12 est généralement sous la forme d'un compteur conçu pour être réinitialisé aussitôt que son contenu atteint N. Ainsi, le diviseur 12 produit une impulsion INC toutes les N impulsions de l'horloge CK.

A chaque fois qu'un paquet de données est disponible à l'émission, la taille du paquet est comparée au contenu du compteur 10. Si le nombre de flits du paquet est inférieur ou égal au contenu du compteur, le paquet est transmis et le compteur est décrémenté de la taille du paquet. Dans le cas contraire, le paquet peut être mis en attente et le compteur n'est pas modifié.

Un tel limiteur de débit permet de programmer des débits normalisés selon des valeurs discrètes $\rho = c/N$, où $c$ et N sont des entiers tels que $c \leq N$. Si l'on souhaite avoir un pas de réglage fin entre les débits programmables, N est choisi plutôt grand. Cependant, lorsque N est grand, il s'écoule un délai corrélativement grand entre deux incrémentations du compteur de jetons, ce qui augmente la latence à la transmission des paquets. Une latence relativement grande peut être acceptable lorsque le débit programmé est faible (par exemple c/N = 1/100), mais peut être inacceptable lorsque le débit programmé est élevé (par exemple c/N = 99/100, où les incréments du compteur de jetons n'ont lieu qu'une fois tous les 100 cycles d'horloge).

Ainsi, pour des débits élevés, on souhaite que N soit plutôt proche de 1, ce qui réduit considérablement la finesse du pas de réglage de $\rho$.

La figure 2 est un schéma de principe d'un mode de réalisation de limiteur de débit pouvant offrir un pas de réglage fin quel que soit le débit programmé $\rho$, et permettant même de programmer un débit $\rho$ qui ne soit pas un rapport de nombres entiers.

Le diviseur par N du limiteur de débit de la figure 1 est remplacé par un diviseur fractionnaire 12', par exemple conçu pour appliquer l'un ou l'autre de deux taux de division entiers, ici des entiers consécutifs N et N+1. L'entier N peut être la partie entière de $c/\rho$, notée $[c/\rho]$, d'où il résulte que le débit déterminé par le taux N seul est supérieur ou égal au débit programmé $\rho$, lui-même inférieur au débit déterminé par le taux N+1 seul.

De façon générale, au lieu de deux entiers consécutifs N et N+1, on peut utiliser deux entiers N1 et N2 distincts quelconques, choisis pour que le débit programmé soit compris entre les débits limite déterminés par ces deux entiers.

Le diviseur 12' est commandé par un modulateur 14 conçu pour déterminer le taux de division à appliquer à chaque incrément en fonction de la partie fractionnaire de c/ρ, notée {c/ρ}. La modulation est ici telle que le rapport entre la fréquence d'application du taux N+1 et le nombre d'incréments tende vers {c/ρ}, produisant une cadence d'incrémentation du compteur de jetons égale en moyenne au débit programmé.

On utilise une « modulation », car on cherche à alterner autant que possible les deux taux de division pour linéariser l'incrémentation du compteur de jetons et régulariser le débit réel résultant. On pourrait emprunter un tel modulateur aux boucles à verrouillage de phase ou aux modulateurs delta-sigma, mais ces systèmes sont complexes du fait qu'ils sont conçus pour suivre des signaux analogiques variables.

La figure 3 est un schéma-bloc d'un limiteur de débit du type de la figure 2, illustrant en détail un exemple de modulateur simple, suffisant aux besoins du limiteur de débit. Le modulateur 14 comprend un compteur 16 connecté pour être incrémenté à chaque cycle d'horloge CK par un entier *a*, programmable dans un registre. L'incrémentation est faite en boucle ouverte, c'est-à-dire sans contrôle du débordement du compteur.

Le compteur 16 ayant une taille limitée, disons de k bits, son contenu évolue modulo $2^k$. En d'autres termes le compteur 16 déborde régulièrement pour recommencer le comptage, raison pour laquelle on dénomme ce compteur ci-après « compteur à débordement ». Si $2^k$ est divisible par *a,* le contenu du compteur 16 évolue selon des rampes de période égale à $2^k/a$ cycles d'horloge, démarrant à 0 et finissant à $2^k$-1. Si $2^k$ n'est pas divisible par *a,* le contenu du compteur 16 évolue selon des rampes apériodiques qui démarrent à une valeur comprise entre 0 et *a*-1, et qui finissent à une valeur comprise entre $2^k$-*a* et $2^k$-1.

Les débordements du compteur 16 sont pris comme référence pour produire la modulation recherchée. Le compteur 16 peut être conçu pour produire une impulsion OF à chaque débordement. Alors, le diviseur fractionnaire 12' peut être configuré par défaut pour appliquer le taux de division N, et répondre à chaque impulsion OF pour appliquer ponctuellement le taux de division N+1.

La valeur de l'incrément *a* détermine ainsi la fréquence d'application du taux N+1. Pour obtenir la modulation recherchée ici, l'incrément *a* est exprimé par la relation :

$$2^k\{c/\rho\}\bullet\rho/c = 2^k(1-[c/\rho]\bullet\rho/c)$$

arrondie à la valeur entière supérieure ou inférieure.

Le diviseur fractionnaire 12' peut être réalisé, comme cela est représenté, par un simple diviseur par N 12, dont l'entrée d'horloge est précédée d'une porte ET 18. L'une des entrées de la porte ET reçoit le signal d'horloge CK, et l'autre le complément des impulsions de débordement OF. Avec cette configuration, la porte ET est transparente pour l'horloge CK tant que le compteur 16 ne déborde pas, entraînant une division par N par défaut. A chaque débordement, la porte ET 18 masque l'impulsion d'horloge CK courante de l'entrée du diviseur 12. Le diviseur « saute » l'impulsion. Ce diviseur étant en général un compteur, le compteur est figé pendant un cycle, provoquant le retard d'un cycle à la production de la prochaine impulsion d'incrémentation INC du compteur de jetons. En d'autres termes, l'impulsion INC est ponctuellement produite à N+1 cycles au lieu de N cycles.

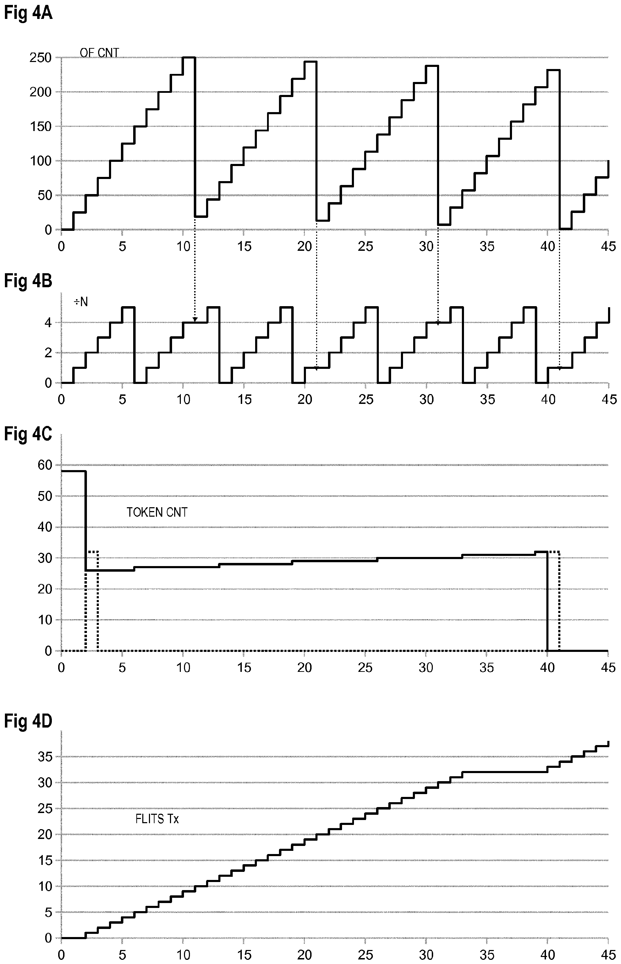

Les figures 4A à 4D sont des graphes illustrant plus clairement ce fonctionnement dans le cadre d'un exemple. Dans cet exemple, pour une taille de paquet de 32 flits, on a utilisé :

$\rho$ = 0,15,

*b* = $\sigma$ = 58,

*c* = 1,

k = 8, $2^k$ = 256.

Ces paramètres produisent les valeurs suivantes, calculées selon les relations mentionnées précédemment :

N = 6,

*a = 25.*

La figure 4A représente l'évolution du compteur à débordement 16. Ce compteur fonctionne en roue libre et ses premiers débordements ont lieu aux cycles 12, 22, 32 et 42.

La figure 4B représente l'évolution d'un compteur formant le diviseur 12, ici un diviseur par 6. Si le diviseur 12 fonctionnait en roue libre, il produirait des rampes périodiques de 6 cycles d'horloge et d'amplitude 5, comme la première rampe. Aux instants où le compteur 16 (figure 4A) déborde, identifiés par des traits de rappel, le compteur 12 est figé pendant un cycle d'horloge. Ainsi, le compteur 12 reste à 4 pendant les deux cycles 11 et 12, reste à 1 pendant les deux cycles 21 et 22, reste à 4 pendant les deux cycles 31 et 32, et reste à 1 pendant les deux cycles 41 et 42.

Il en résulte qu'un taux de division de 7 (6+1) est appliqué aux deuxième, quatrième, cinquième, et septième rampes de la figure 4B. Dès ces premiers cycles, on constate que sur 7 incréments du compteur de jetons, 4 ont été faits sur un intervalle de 7 cycles, et 3 ont été faits sur un intervalle de 6 cycles, résultant en un intervalle moyen de 6,57 cycles. Cette valeur est déjà proche de l'intervalle programmé de 1/0,15 = 6,67, et s'en approchera davantage au cours du temps.

La figure 4C représente en trait plein l'évolution du compteur de jetons 10, initialisé à la valeur *b*=58, en supposant qu'un premier paquet de 32 flits devient disponible à l'émission au cycle 2.

La figure 4D, à laquelle on se référera en même temps qu'à la figure 4C, représente le cumul des flits émis.

L'émission du paquet commence au cycle 3, tandis que le compteur de jetons est décrémenté de 32, ces opérations étant identifiées par une impulsion en pointillés de la taille du paquet.

Le compteur de jetons est ensuite incrémenté d'une unité à chacun des cycles 6, 13, 19, 26, 33, 39... définis par le diviseur (figure 4B).

Le dernier flit du premier paquet est émis au cycle 33. On suppose qu'un nouveau paquet est disponible dès le cycle 34, mais le compteur de jetons contient 31, valeur insuffisante pour émettre le paquet. L'émission du nouveau paquet ne commence qu'au cycle 40, après que le compteur de jetons a atteint 32 au cycle 39.

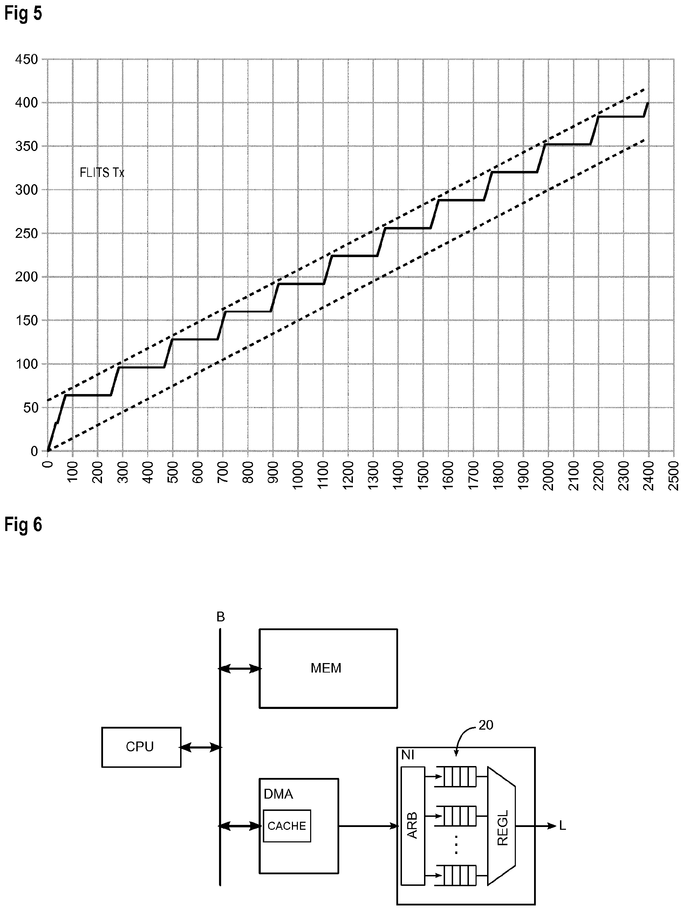

La figure 5 est une prolongation à long terme, sur près de 2500 cycles, du graphe de la figure 4C, en supposant que des paquets sont en permanence disponibles à l'émission. Les droites en pointillés représentent les limites que doit respecter l'évolution du cumul des flits émis pour être conforme à un profil σ-ρ.

La droite limite basse est définie par y = ρt = 0,15t, où t est le temps exprimé en nombre de cycles d'horloge.

La droite limite haute est définie par y = ρt + σ = 0,15t + 58.

Ces droites limites sont définies selon la valeur exacte programmée de ρ. On constate que le cumul des flits émis respecte parfaitement ces limites, bien que $1/\rho$ ne soit pas un entier.

La résolution avec laquelle on peut programmer le débit ρ dépend de la taille $k$ du compteur à débordement, de N, et de $c$. Plus spécifiquement, elle est égale à $2^{-k}c/N$ pour $N < 2^k$. Lorsque N est supérieur à $2^k$, l'incrément a est toujours nul et la résolution vaut $c/(N(N+1))$.

La figure 6 représente schématiquement un exemple de système d'émission de plusieurs flots concurrents sur un lien réseau partagé L, tel qu'évoqué dans la demande de brevet US 2014-0301206. Plusieurs limiteurs de débit tels que décrits ici peuvent être utilisés dans un tel système.

Le système comprend un processeur CPU, une mémoire MEM, et un circuit d'accès mémoire direct DMA, interconnectés par un bus système B. Une interface réseau NI est connectée pour envoyer sur le lien réseau L des données fournies par l'intermédiaire du circuit DMA. Cette interface réseau comprend plusieurs files 20, par exemple huit, dont chacune peut être associée à une connexion, un canal virtuel, ou plus généralement une session d'émission différente.

Un arbitre ARB peut être prévu pour gérer le remplissage des files, par exemple selon une attente équitable pondérée (ou WFQ "Weighted Fair-Queuing"). Le vidage des files sur le lien réseau L est géré par un régulateur REGL. Ce régulateur peut comprendre un limiteur de débit par file, dont les paramètres sont programmés par le processeur à la mise sous tension du système. Les limiteurs de débit peuvent être configurés pour que chacun soit activé à tour de rôle de manière circulaire. Le limiteur actif émet alors des paquets prélevés dans sa file jusqu'à ce que son compteur de jetons soit épuisé ou que la file soit vide.

De nombreuses variantes et modifications des modes de réalisation décrits ici apparaîtront à l'homme du métier. Par exemple, bien que l'on ait décrit un diviseur fractionnaire qui fonctionne par défaut avec le taux de division plus petit (N) et qui est commandé ponctuellement par le modulateur pour appliquer le taux de division plus élevé (N+1), la configuration duale peut être utilisée, à savoir que le diviseur fonctionne par défaut avec le taux de division plus élevé (N+1) et que ce taux est ponctuellement commuté sur le taux plus petit (N) par le modulateur. Dans ce cas, on peut utiliser la valeur 1-{c/ρ} à la place de {c/ρ} dans les différentes relations décrites.

**Revendications**

1. Circuit de limitation de débit d'une transmission de données selon la technique du seau à jetons, comprenant :

   • un compteur de jetons (10) configuré pour être incrémenté à une cadence déterminant le débit moyen de la transmission ;
   • un diviseur de fréquence (12') connecté pour commander l'incrémentation du compteur de jetons à partir d'une horloge (CK), le diviseur ayant un taux de division entier (N) ; et
   • un modulateur (14) configuré pour alterner le taux de division entre deux entiers différents (N, N+1) de manière à faire tendre le débit moyen résultant vers un débit programmé entre deux débits correspondant respectivement aux deux entiers.

2. Circuit selon la revendication 1, dans lequel le modulateur comprend un compteur à débordement (16) connecté pour être incrémenté à la fréquence d'horloge (CK) par un incrément fixe (*a*) basé sur l'écart entre le débit programmé et le débit déterminé par un taux de division de base choisi parmi les deux entiers (N, N+1), le compteur à débordement étant connecté au diviseur pour alterner le taux de division à chaque débordement.

3. Circuit selon la revendication 2, dans lequel le diviseur de fréquence (12') est configuré pour appliquer par défaut le plus petit (N) des deux entiers comme taux de division et augmenter ponctuellement le taux de division à chaque débordement du compteur à débordement.

**4.** Circuit selon la revendication 3, dans lequel le diviseur de fréquence comprend un compteur auxiliaire (12) connecté pour être incrémenté à la fréquence d'horloge (CK) et pour compter jusqu'au plus petit des deux entiers (N), le compteur à débordement étant connecté pour faire sauter une incrémentation au compteur auxiliaire à chaque débordement.

**5.** Circuit selon la revendication 2, dans lequel :

• le débit programmé est représenté par un débit normalisé ($\rho$) compris entre 0 et 1,
• le taux de division de base (N) est choisi égal à la partie entière du rapport entre l'incrément (*c*) du compteur de jetons et le débit normalisé, et
• l'incrément (*a*) du compteur à débordement est basé sur la partie fractionnaire du rapport entre l'incrément du compteur de jetons et le débit normalisé.

**6.** Circuit selon la revendication 5, dans lequel l'incrément du compteur à débordement est exprimé par la relation :

$$2^k \{c/\rho\} \cdot \rho/c$$

arrondie à l'entier inférieur ou supérieur, où $\rho$ est le débit normalisé, c l'incrément du compteur de jetons, *k* le nombre de bits du compteur à débordement, et {} désigne la partie fractionnaire.

**7.** Procédé de limitation de débit d'une transmission de données selon la technique du seau à jetons, comprenant les étapes suivantes :

• incrémenter un compteur de jetons (10) à des intervalles consécutifs dont la longueur est variable entre deux valeurs discrètes (N, N+1) multiples de la période d'une horloge (CK) ;
• choisir les deux valeurs discrètes en fonction d'un débit de transmission programmé ; et
• appliquer les deux valeurs discrètes au compteur de jetons selon des fréquences respectives choisies pour que la cadence moyenne d'incrémentation du compteur de jetons corresponde au débit de transmission programmé.

**8.** Procédé selon la revendication 7, comprenant les étapes suivantes :

• appliquer par défaut une première des deux valeurs discrètes (N) comme intervalle d'incrémentation du compteur de jetons ;
• incrémenter un compteur à débordement (16) à la fréquence de l'horloge (CK) par un incrément (*a*) basé sur l'écart entre le débit programmé et le débit correspondant à la première valeur discrète ; et
• appliquer ponctuellement au compteur de jetons la deuxième valeur discrète (N+1) comme intervalle d'incrémentation à chaque débordement du compteur à débordement.

**Patentansprüche**

**1.** Schaltung zur Begrenzung der Rate einer Datenübertragung gemäß der Token-Bucket-Technik, umfassend:

- einen Tokenzähler (10), der konfiguriert ist, um auf einen Takt inkrementiert zu werden, welcher die durchschnittliche Rate der Übertragung bestimmt;
- einen Frequenzteiler (12'), der verbunden ist, um die Inkrementierung des Tokenzählers ab einem Taktgeber (CK) zu steuern, wobei der Teiler ein ganzzahliges Teilungsverhältnis (N) hat; und
- einen Modulator (14), der konfiguriert ist, um das Teilungsverhältnis zwischen zwei verschiedenen Ganzzahlen (N, N+1) derart abzuwechseln, dass die resultierende durchschnittliche Rate zu einer programmierten Rate zwischen zwei Raten geführt wird, die jeweils den beiden Ganzzahlen entsprechen.

**2.** Schaltung nach Anspruch 1, wobei der Modulator einen Überlaufzähler (16) umfasst, der verbunden ist, um auf die Frequenz eines Taktgebers (CK) mittels eines festen Inkrements ($\alpha$), basierend auf der Differenz zwischen der programmierten Rate und der Rate, bestimmt durch ein Basisteilungsverhältnis, ausgewählt aus den beiden Ganzzahlen (N, N+1), inkrementiert zu werden, wobei der Überlaufzähler mit dem Teiler verbunden ist, um das Teilungsverhältnis bei jedem Überlauf abzuwechseln.

**3.** Schaltung nach Anspruch 2, wobei der Frequenzteiler (12') konfiguriert ist, um standardmäßig die kleinere (N) der beiden Ganzzahlen als Teilungsverhältnis anzuwenden und punktuell das Teilungsverhältnis bei jedem Überlauf des Überlaufzählers zu erhöhen.

**4.** Schaltung nach Anspruch 3, wobei der Frequenzteiler einen Hilfszähler (12) umfasst, der verbunden ist, um auf die Frequenz eines Taktgebers (CK) inkrementiert zu werden und um bis zu der kleineren der beiden Ganzzahlen (N) zu zählen, wobei der Überlaufzähler verbunden ist, damit der Hilfszähler bei jedem Überlauf eine Inkrementierung überspringt.

**5.** Schaltung nach Anspruch 2, wobei:

- die programmierte Rate durch eine standardisierte Rate ($\rho$) zwischen 0 und 1 dargestellt ist,
- das Basisteilungsverhältnis (N) gleich dem ganzzahligen Teil des Verhältnisses zwischen dem Inkrement (*c*) des Tokenzählers und der standardisierten Rate ausgewählt ist, und
- das Inkrement ($\alpha$) des Überlaufzählers auf dem Bruchteil des Verhältnisses zwischen dem Inkrement des Tokenzählers und der standardisierten Rate basiert.

**6.** Schaltung nach Anspruch 5, wobei das Inkrement des Überlaufzählers durch das Verhältnis ausgedrückt ist:

$$2^k \{c/\rho\} \cdot \rho/c$$

gerundet auf die niedrigere oder höhere Ganzzahl, wobei $\rho$ die standardisierte Rate, c das Inkrement des Tokenzählers, *k* die Anzahl der Bits des Überlaufzählers ist und {} den Bruchteil bezeichnet.

**7.** Verfahren zur Begrenzung der Rate einer Datenübertragung gemäß der Token-Bucket-Technik, umfassend die folgenden Schritte:

- Inkrementieren eines Tokenzählers (10) in aufeinanderfolgenden Intervallen, deren Länge zwischen zwei diskreten Werten (N, N+1), die ein Vielfaches der Periode eines Taktgebers (CK) betragen, variabel ist;
- Auswählen der beiden diskreten Werte in Abhängigkeit von einer programmierten Übertragungsrate; und
- Anwenden der beiden diskreten Werte auf den Tokenzähler gemäß jeweils ausgewählten Frequenzen, damit der durchschnittliche Inkrementierungstakt des Tokenzählers der programmierten Übertragungsrate entspricht.

**8.** Verfahren nach Anspruch 7, umfassend die folgenden Schritte:

- standardmäßiges Anwenden eines ersten der beiden diskreten Werte (N) als Inkrementierungsintervall des Tokenzählers;
- Inkrementieren eines Überlaufzählers (16) auf die Frequenz eines Taktgebers (CK) mittels eines Inkrements ($\alpha$), basierend auf der Differenz zwischen der programmierten Rate und der Rate entsprechend dem ersten diskreten Wert; und
- punktuelles Anwenden des zweiten diskreten Wertes (N+1) auf den Tokenzähler als Inkrementierungsintervall bei jedem Überlauf des Überlaufzählers.

**Claims**

**1.** A token bucket flow rate limiter for data transmission, comprising:

• a token counter (10) configured to be incremented at a rate determining the average flow rate of the transmission;
• a frequency divider (12') connected to control incrementing of the token counter from a clock (CK), the divider having an integer division factor (N) ; and
• a modulator (14) configured to alternate the division factor between two different integers (N, N+1) so that the resulting average flow rate tends to a programmed flow rate comprised between two boundary flow rates respectively corresponding to the two integers.

**2.** The flow rate limiter of claim 1, wherein the modulator comprises an overflow counter (16) connected to be incremented at the clock frequency (CK) by a fixed increment (*a*) based on the difference between the programmed flow rate and the flow rate determined by a base division factor selected between the two integers (N, N+1), the overflow counter being connected to the divider to alternate the division ratio at each overflow.

**3.** The flow rate limiter of claim 2, wherein the frequency divider (12') is configured to apply by default the smallest (N) of the two integers as the division factor and transitorily increase the division factor at each overflow of the overflow counter.

**4.** The flow rate limiter of claim 3, wherein the frequency divider comprises an auxiliary counter (12) connected to be incremented at the clock frequency (CK) and count up to the smallest of the two integers (N), the overflow counter being connected to make the auxiliary counter skip one increment at each overflow.

**5.** The flow rate limiter of claim 2, wherein:

• the programmed flow rate is represented by a normalized flow ($\rho$) rate between 0 and 1,
• the base division factor (N) is chosen equal to the integer part of the ratio between the token counter increment (*c*) and the normalized flow rate, and
• the increment (*a*) of the overflow counter is based on the fractional part of the ratio between the token counter increment and the normalized flow rate.

**6.** The flow rate limiter of claim 5, wherein the increment of the overflow counter is expressed by the relationship:

$$2^k \{c/\rho\} \bullet \rho/c$$

rounded to the lower or higher integer, where $\rho$ is the normalized flow rate, *c* is the increment of the token counter, k is the number of bits of the overflow counter, and {...} designates a fractional part.

**7.** A method of limiting the flow rate of a data transmission based on a token bucket, comprising the steps of:

• incrementing a token counter (10) at consecutive intervals having durations that are variable between two discrete values (N, N+1) that are multiples of the period of a clock (CK) ;
• selecting the two discrete values according to a programmed flow rate; and
• applying the two discrete values to the token counter according to respective frequencies selected so that the average token counter incrementing rate corresponds to the programmed flow rate.

**8.** The method of claim 7, comprising the steps of:

• applying by default a first of the two discrete values (N) for the incrementing interval of the token counter;
• incrementing an overflow counter (16) at the frequency of the clock (CK) by an increment (*a*) based on the difference between the programmed flow rate and the flow rate corresponding to the first discrete value; and
• transitorily applying to the token counter the second discrete value (N+1) as the incrementing interval at each overflow of the overflow counter.

**Fig 1**

**Fig 2**

**Fig 3**

**Fig 4A**

OF CNT

**Fig 4B**

÷N

**Fig 4C**

TOKEN CNT

**Fig 4D**

FLITS Tx

**Fig 5**

**Fig 6**

## RÉFÉRENCES CITÉES DANS LA DESCRIPTION

**Documents brevets cités dans la description**

- JP 2007088994 B
- US 20140301206 A